# DEMANDE DE BREVET EUROPEEN

(11) **EP 0 947 396 A1**
(43) Date de publication de la demande: **06.10.1999**
(21) Numéro de dépôt: 99400762.3
(22) Date de dépôt: 29.03.1999
(51) Int. Cl.: B60R 21/20

(54) **Pièce d'équipement de véhicule automobile équipée d'un module à sac gonflable**

(30) Priorité: 03.04.1998 FR 9804185
(71) Demandeur: ECIA - EQUIPEMENTS ET COMPOSANTS POUR L'INDUSTRIE AUTOMOBILE, F-25400 Audincourt (FR)
(72) Inventeur: Bernard, Xavier, 25200 Montbeliard (FR)
(74) Mandataire: Habasque, Etienne Joel Jean-François

(57) **Abrégé**

Cette pièce comportant au moins une armature de support (3) associée à un boîtier (4) de réception du module à sac gonflable, muni d'un couvercle (5) s'étendant le long d'une portion correspondante (6) de l'armature (3), cette armature et ce couvercle comportant des portions correspondantes (7,8) escamotables lors du gonflage du sac pour libérer un passage en vue du déploiement de celui-ci et délimitées d'une part par des lignes de rupture préférentielle (9,11) et d'autre part par des moyens d'articulation (10,12) sur le reste de ces pièces, est caractérisée en ce que les lignes de rupture préférentielle (9,11) du couvercle et de l'armature sont décalées l'une par rapport a l'autre, la ligne de rupture préférentielle (11) de l'armature étant plus éloignée du module à sac gonflable que celle du couvercle.

## Description

La présente invention concerne une pièce d'équipement de véhicule automobile équipée d'un module à sac gonflable.

On connaît déjà dans l'état de la technique, des pièces d'équipement de véhicule automobile, telles que par exemple des coussins centraux de volant de direction, des planches de bord ou encore des pièces de garnissage des ouvrants de véhicule, qui comportent au moins une armature de support associée à un boîtier de réception du module à sac gonflable, muni d'un couvercle s'étendant le long d'une portion correspondante de l'armature.

Cette armature et ce couvercle comportent alors des portions correspondantes escamotables lors du gonflage du sac, pour libérer un passage en vue du déploiement de celui-ci et qui sont délimitées d'une part, par des lignes de rupture préférentielle et d'autre part, par des moyens d'articulation sur le reste de ces pièces.

On conçoit alors que lors du déclenchement du fonctionnement du module à sac gonflable, le sac se gonfle et vient pousser sur le couvercle et sur l'armature et plus particulièrement sur les portions escamotables de ces pièces jusqu'au moment où la limite de résistance des lignes de rupture préférentielle de ces pièces est atteinte, ce qui provoque alors l'escamotage de ces portions pour permettre le déploiement du sac.

Cependant, la présence de ces lignes de rupture préférentielle peut poser un certain nombre de problèmes, notamment de résistance de la pièce d'équipement aux chocs externes.

Le but de l'invention est donc de résoudre ces problèmes.

A cet effet, l'invention a pour objet une pièce d'équipement de véhicule automobile, équipée d'un module à sac gonflable, du type comportant au moins une armature de support associée à un boîtier de réception du module à sac gonflable, muni d'un couvercle s'étendant le long d'une portion correspondante de l'armature, cette armature et ce couvercle comportant des portions correspondantes escamotables lors du gonflage du sac pour libérer un passage en vue du déploiement de celui-ci et délimitée d'une part, par des lignes de rupture préférentielle et d'autre part, par des moyens d'articulation sur le reste de ces pièces, caractérisée en ce que les lignes de rupture préférentielle du couvercle et de l'armature sont décalées l'une par rapport à l'autre, la ligne de rupture de l'armature étant plus éloignée du module à sac gonflable que celle du couvercle.

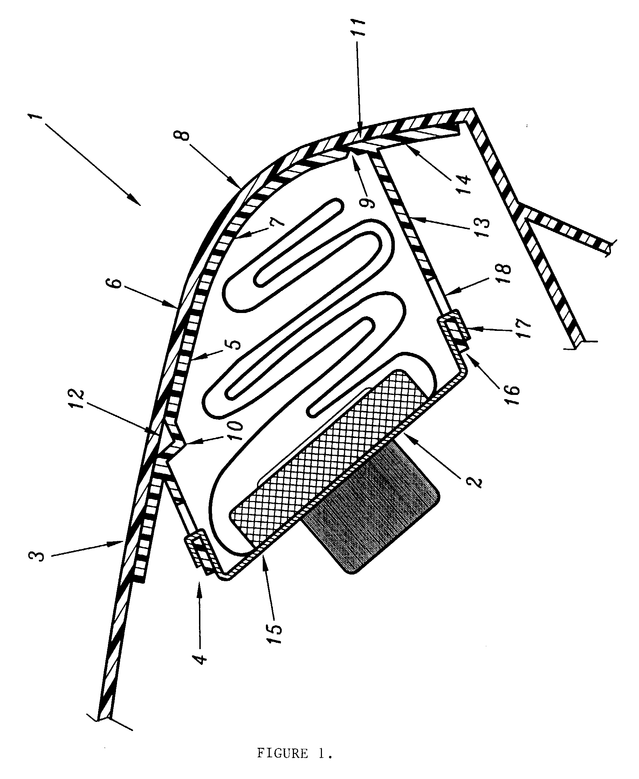

L'invention sera mieux comprise à l'aide de la description qui va suivre, donnée uniquement à titre d'exemple et faite en se référant au dessin annexé, qui représente une vue en coupe schématique illustrant un exemple de réalisation d'une pièce d'équipement de véhicule automobile selon l'invention.

On a en effet représenté sur cette figure, une pièce d'équipement de véhicule automobile, qui est désignée par la référence générale 1, et est constituée par exemple par une planche de bord de véhicule.

Il va de soi bien entendu que d'autres pièces d'équipement peuvent être envisagées.

Cette pièce est équipée d'un module à sac gonflable désigné par la référence générale 2 sur cette figure et comporte au moins une armature de support désignée par la référence générale 3, associée à un boîtier 4 de réception du module à sac gonflable.

Ce boîtier est muni d'un couvercle désigné par la référence générale 5 s'étendant le long d'une portion correspondante 6 de la face interne de l'armature et ce couvercle et cette armature comportent des portions correspondantes escamotables lors du gonflage du sac pour libérer un passage en vue du déploiement de celui-ci.

Ces portions escamotables sont désignées par les références générales 7 et 8 sur cette figure respectivement pour le couvercle et l'armature, 5 et 6.

Ces portions 7 et 8 sont délimitées d'une part, c'est-à-dire par exemple d'un côté, par des lignes de rupture préférentielle et d'autre part, c'est-à-dire par exemple d'un autre côté, par des moyens d'articulation sur le reste de ces pièces.

C'est ainsi par exemple que le couvercle comporte d'un côté une ligne de rupture préférentielle désignée par la référence générale 9 sur cette figure et de l'autre côté des moyens d'articulation désignés par la référence générale 10, formés par exemple par un pli venu de matière avec le couvercle.

La ligne de rupture préférentielle de l'armature est quant à elle désignée par la référence générale 11, tandis que les moyens d'articulation de la portion 8 de cette armature sur le reste de celle-ci, sont désignés par la référence générale 12, cette ligne de rupture préférentielle et ces moyens d'articulation étant formés par exemple par des zones de section réduite ou découpées de l'armature.

Différents modes de réalisation de ces différentes zones de ces pièces sont connus dans l'état de la technique.

C'est ainsi par exemple que des moyens de découpage au laser peuvent être utilisés pour réaliser les zones de section réduite ou découpées de l'armature, tandis que la ligne de rupture préférentielle du couvercle et les moyens d'articulation de celui-ci peuvent être venus directement de moulage lors de la fabrication de celui-ci.

Selon l'invention, les lignes de rupture préférentielle du couvercle et de l'armature sont décalées l'une par rapport à l'autre, la ligne de rupture de l'armature étant plus éloignée du module à sac gonflable que celle du couvercle.

On peut en effet constater sur cette figure, que la ligne de rupture 11 de l'armature est située au-delà de la ligne de rupture 9 du couvercle, par rapport au module à sac gonflable.

Ceci permet d'améliorer les caractéristiques de résistance mécanique aux chocs externes, de la pièce d'équipement, dans la mesure où lors d'un tel choc, une portion de l'armature peut prendre appui sur une portion correspondante du couvercle et/ou du boîtier de réception du module à sac gonflable.

De préférence et comme cela est représenté, les lignes de rupture 9 et 11 respectivement du couvercle et de l'armature sont situées de part et d'autre de la paroi latérale du boîtier de réception du module à sac gonflable, cette paroi étant désignée par la référence générale 13 sur cette figure.

De plus, on notera que le couvercle peut comporter un bord périphérique en saillie par rapport au reste du boîtier désigné par la référence générale 14 sur cette figure.

De préférence également, le couvercle et la portion correspondante d'armature sont fixés l'un sur l'autre, par exemple par soudage, collage ou autre, sauf dans la zone située entre les deux lignes de rupture préférentielle de ces pièces, c'est-à-dire entre les lignes de rupture 9 et 11.

Le fond du boîtier de réception du module à sac gonflable 4 peut quant à lui être ouvert et être adapté pour recevoir une platine de support de ce module à sac gonflable, cette platine étant désignée par la référence générale 15 sur cette figure.

Dans ce cas, cette platine de support 15 peut être fixée sur la paroi latérale 13 du boîtier par l'intermédiaire par exemple de moyens d'accrochage désignés par la référence générale 16 sur cette figure, ces moyens d'accrochage se présentant par exemple sous la forme de crochets 17 adaptés pour s'engager dans des évidements complémentaires 18 de la paroi latérale du boîtier 4 afin d'assurer une fixation fiable en position du module à sac gonflable dans le boîtier.

On conçoit alors que la structure de la pièce d'équipement selon l'invention présente un certain nombre d'avantages par rapport aux structures des pièces de l'état de la technique, notamment au niveau de sa résistance mécanique aux chocs externes.

En effet, le décalage entre les lignes de rupture et la disposition de celles-ci de part et d'autre par exemple de la paroi du boîtier, permet d'améliorer les caractéristiques de résistance mécanique de celle-ci à ces chocs tout en permettant la libération du passage pour le sac lors de son déploiement.

Il va de soi bien entendu que d'autres modes de réalisation d'une telle pièce peuvent être envisagés.

## Revendications

1. Pièce d'équipement de véhicule automobile, équipée d'un module à sac gonflable (2), du type comportant au moins une armature de support (3) associée à un boîtier (4) de réception du module à sac gonflable, muni d'un couvercle (5) s'étendant le long d'une portion correspondante (6) de l'armature (3), cette armature et ce couvercle comportant des portions correspondantes (7,8) escamotables lors du gonflage du sac pour libérer un passage en vue du déploiement de celui-ci et délimitées d'une part par des lignes de rupture préférentielle (9,11) et d'autre part par des moyens d'articulation (10,12) sur le reste de ces pièces, caractérisée en ce que les lignes de rupture préférentielle (9,11) du couvercle et de l'armature sont décalées l'une par rapport à l'autre, la ligne de rupture préférentielle (11) de l'armature étant plus éloignée du module à sac gonflable que celle du couvercle.

2. Pièce selon la revendication 1, caractérisée en ce que les lignes de rupture (9,11) du couvercle et de l'armature sont situées de part et d'autre de la paroi latérale (13) du boîtier (4) de réception du module à sac gonflable.

3. Pièce selon la revendication 1 ou 2, caractérisée en ce que le couvercle (5) comporte un bord périphérique (14) en saillie par rapport au reste du boîtier (4).

4. Pièce selon l'une quelconque des revendications précédentes, caractérisée en ce que le couvercle et la portion correspondante d'armature sont fixés l'une sur l'autre, sauf dans la zone située entre les deux lignes de rupture préférentielle (9,11) de ces pièces.

5. Pièce selon l'une quelconque des revendications précédentes, caractérisée en ce que le fond du boîtier (4) de réception du module à sac gonflable est ouvert et adapté pour recevoir une platine (15) de support du module à sac gonflable.

6. Pièce selon la revendication 5, caractérisée en ce que la platine de support (15) du module à sac gonflable est fixée sur la paroi (13) du boîtier par l'intermédiaire de moyens d'accrochage (16).
